(19) Europäisches Patentamt
European Patent Office
Office européen des brevets

(11) **EP 4 723 489 A1**

(12) **EUROPEAN PATENT APPLICATION**

(43) Date of publication:
**08.04.2026 Bulletin 2026/15**

(21) Application number: **25206667.5**

(22) Date of filing: **03.10.2025**

(51) International Patent Classification (IPC):
***H04B 1/10*** (2006.01)      ***H04B 1/30*** (2006.01)
***H04B 1/12*** (2006.01)

(52) Cooperative Patent Classification (CPC):
**H04B 1/10; H04B 1/1027; H04B 1/109;**
**H04B 1/123;** H04B 1/30

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **03.10.2024 FI 20246190**

(71) Applicant: **Nokia Technologies Oy**
**02610 Espoo (FI)**

(72) Inventors:
• **BLÜCHER BRINK, Stig**
  **9220 Aalborg (DK)**
• **NIELSEN, Kim**
  **9280 Storvorde (DK)**
• **RYSGAARD, Bent Henneberg**
  **9220 Aalborg (DK)**

(74) Representative: **Page White Farrer**
**Bedford House**
**21a John Street**
**London WC1N 2BF (GB)**

(54) **APPARATUS, METHOD AND COMPUTER PROGRAM**

(57)      There is provided an apparatus comprising means for receiving a first signal on at least two frequency carriers, wherein two of the frequency carriers are separated by a frequency gap and are of unequal bandwidth to each other, means for determining a power of a second signal located in the frequency gap, means for determining that the power of the second signal is above a first threshold and means for applying an in-phase/quadrature (IQ-)imbalance compensation algorithm to the received first signal to suppress an image signal from the second signal in at least one of said two of the frequency carriers.

FIG. 10

**Description**

TECHNICAL FIELD

Various embodiments of this disclosure relate generally to methods, apparatus and computer programs, and in particular - but not exclusively, to unequal carrier bandwidth in fragmented carriers.

BACKGROUND

A communication system can be seen as a facility that enables communication sessions between two or more communication devices, or provides communication devices access to a network. A mobile or wireless communication network is one example of a communication network. A communication device may be provided with a service by an application server.

A mobile or wireless communication network may operate in accordance with standard(s), such as those provided by 3GPP (Third Generation Partnership Project) or ETSI (European Telecommunications Standards Institute). Examples of mobile or wireless communication network that operate in accordance with 3GPP standards are generally referred to as 4G (4th Generation) networks, 5G (5th Generation) network, 5G-Advanced networks and 6G networks.

SUMMARY

Some embodiments of this disclosure will be described with respect to certain aspects. These aspects are not intended to indicate key or essential features of the various example embodiments of this disclosure, nor are they intended to be used to limit the scope of thereof. Other features, aspects, and elements will be readily apparent to a person skilled in the art in view of this disclosure. For example, it should be appreciated that further aspects may be provided by the combination of any two or more of the various aspects described herein.

In a first aspect there is provided an apparatus comprising means for receiving a first signal on at least two frequency carriers, wherein two of the frequency carriers are separated by a frequency gap and are of unequal bandwidth to each other, means for determining a power of a second signal located in the frequency gap, means for determining that the power of the second signal is above a first threshold and means for applying an in-phase/quadrature (IQ-)imbalance compensation algorithm to the received first signal to suppress an image signal from the second signal in at least one of said two of the frequency carriers.

The means for applying the IQ-imbalance compensation algorithm may be configured to apply the IQ-imbalance compensation algorithm in a time domain and/or a frequency domain.

The apparatus may comprise means for receiving a network radio channel configuration at the apparatus and means for determining that the two of the frequency carriers are separated by the frequency gap and are of unequal bandwidth to each other based on the received network radio channel configuration.

The apparatus may comprise means for determining, for the two of the frequency carriers, at least one of a bandwidth part size, a resource block allocation, a frequency location, a control resource set or a center frequency and means for determining that the two of the frequency carriers are separated by the frequency gap and are of unequal bandwidth to each other based on the determined at least one of the bandwidth part size, the resource block allocation, the frequency location, the control resource set or the center frequency of the two of the frequency carriers.

The IQ-imbalance compensation algorithm may be adaptive.

The apparatus may comprise means for determining that the power of the second signal is below a second threshold, wherein the second threshold is equal to or lower than the first threshold and means for determining to stop applying IQ-imbalance compensation algorithm to the received first signal.

The apparatus may be, may comprise, or may be comprised in, a user equipment.

The means may comprise at least one processor; and at least one memory storing instructions that, when executed by the at least one processor, cause the performance of the apparatus.

In a second aspect there is provided a method comprising receiving a first signal on at least two frequency carriers, wherein two of the frequency carriers are separated by a frequency gap and are of unequal bandwidth to each other, determining a power of a second signal located in the frequency gap, determining that the power of the second signal is above a first threshold and applying an in-phase/quadrature (IQ-)imbalance compensation algorithm to the received first signal to suppress an image signal from the second signal in at least one of said two of the frequency carriers.

The method may comprise applying the IQ-imbalance compensation algorithm in a time domain and/or a frequency domain.

The method may comprise receiving a network radio channel configuration at the apparatus and determining that the two of the frequency carriers are separated by the frequency gap and are of unequal bandwidth to each other based on the received network radio channel configuration.

The method may comprise determining, for the two of the frequency carriers, at least one of a bandwidth part size, a resource block allocation, a frequency location, a control resource set or a center frequency and determining that the two of the frequency carriers are separated by the frequency gap and are of unequal bandwidth to each other based on the determined at least one of the bandwidth part size, the resource block allocation, the frequency location, the control resource set or the center frequency of the two of the frequency carriers.

The IQ-imbalance compensation algorithm compensation algorithm may be adaptive.

The method may comprise determining that the power of the second signal is below a second threshold, wherein the second threshold is equal to or lower than the first threshold and determining to stop applying the IQ-imbalance compensation algorithm to the received first signal.

The method may be performed at, by or in a user equipment.

In a third aspect there is provided an apparatus comprising at least one processor, and at least one memory storing instructions which, when executed by the at least one processor, cause the apparatus at least to perform a method according to the second aspect.

In a fourth aspect there is provided a non-transitory computer readable medium comprising instructions wherein the instructions when executed by at least one apparatus cause the apparatus to perform a method according to the second aspect.

In a fifth aspect there is provided a computer readable medium comprising instructions wherein the instructions, when executed by at least one processor of an apparatus cause the apparatus to perform a method according to the second aspect.

Some embodiments of the invention are defined in the dependent claims.

In the above, many different aspects have been described. As previously noted, it should be appreciated that further aspects may be provided by the combination of any two or more of the aspects described above (or otherwise in this disclosure).

Various other aspects are also described in the following detailed description and in the claims.

BRIEF DESCRIPTION OF THE FIGURES

Some embodiments will be described, by way of non-limiting and illustrative example only, with reference to the figures, in which:

Fig. 1 shows an example of a communication network to which examples disclosed herein may be applied;
Fig. 2a shows a schematic diagram of an example fragmented spectrum in Canada;
Fig. 2b shows a schematic diagram of an example fragmented spectrum in Australia;
Fig. 3 shows an annotated schematic diagram of an example fragmented spectrum in Canada;
Fig. 4 shows an example of a generalised IQ-imbalance model;
Fig. 5 shows IRR contours against IQ imbalance;
Fig. 6a shows a schematic diagram of an image caused by an in-gap interferer in a non-contiguous fragmented carrier scenario;

Fig. 6b shows a schematic diagram of an image caused by an in-gap interferer in a non-contiguous fragmented carrier scenario;
Fig. 7 shows EVM in the frequency domain where an image from an in-gap interfere is present;
Fig. 8 shows a flowchart of an example method;
Fig. 9 shows an example compensator structure;
Fig. 10 shows EVM in the frequency domain when image suppression s enabled;

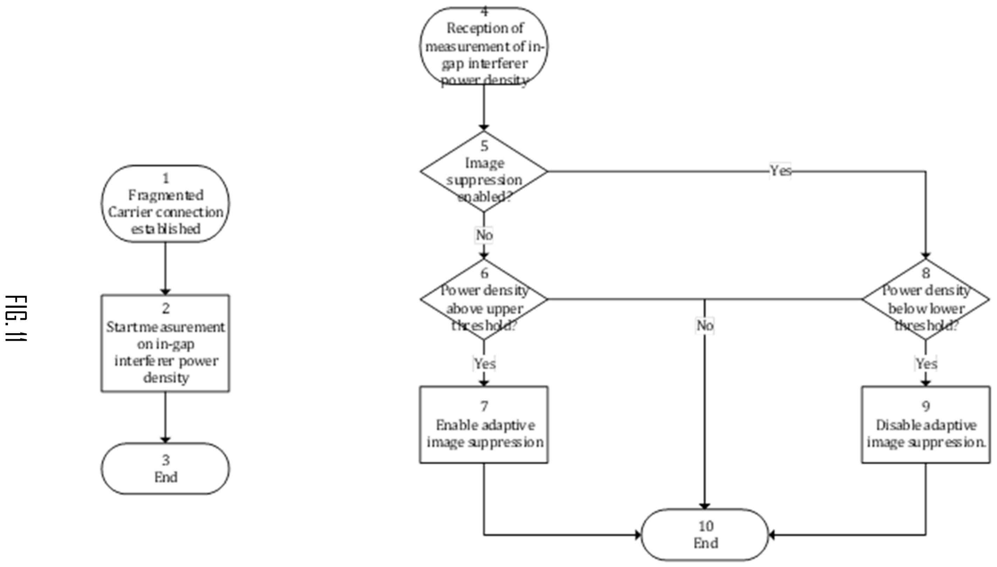

Fig. 11 shows a flowchart of an example method;
Fig. 12 shows an example of an apparatus.

DETAILED DESCRIPTION

The following embodiments are provided by way of non-limiting and illustrative example. Although the specification may refer to "an", "one", or "some" embodiment(s) in several locations of the text, this does not necessarily mean that each reference is made to the same embodiment(s), or that a particular feature only applies to a single embodiment. Single features of different embodiments may also be combined to provide other embodiments. Further, when a particular feature, structure, or characteristic is described in connection of an embodiment, it intended such feature, structure, or characteristic may be applied in connection with other embodiments (whether or not explicitly described).

It shall be understood that although the terms "first," "second" and the like may be used herein to describe various elements, these elements should not be limited by these terms. These terms are only used to distinguish one element from another.

For the purposes of this disclosure, the phrases "at least one of A or B", "at least one of A and B", and "A and/or B" means (A), (B), or (A and B). For the purposes of this disclosure, the phrase "A, B, and/or C" means (A), (B), (C), (A and B), (A and C), (B and C), or (A, B, and C).

As used herein, the term "or" refers to a non-exclusive "or" unless otherwise indicated (e.g., use of "or else" or "or in the alternative").

As used herein, unless stated explicitly, performing a respective feature, step, or functionality "in response to A" does not indicate that the respective feature, step, or functionality is performed immediately after "A" occurs as one or more intervening features, steps, or functionalities may be performed (at least in part) between an occurrence of the respective feature, step, or function and "A". Analogously, performing a respective feature, step, or functionality "based on A" does not indicate that the respective feature, step, or functionality is performed solely based on "A" as the respective feature, step, or functionality may be further based on one or more other features, steps, or functionalities in addition to "A".

Embodiments described herein may be implemented in a communication network, such as any of the following radio access technologies (RATs): Worldwide Interoperability for Micro-wave Access (WiMAX), Global System for Mobile communications (GSM, 2G), GSM EDGE radio access Network (GERAN), General Packet Radio Service (GRPS), Universal Mobile Telecommunication System (UMTS, 3G) based on basic wideband-code division multiple access (W-CDMA), high-speed packet access (HSPA), Long Term Evolution (LTE), LTE-Advanced, and enhanced LTE (eLTE), 5G (also called NR), or any future RAT such as 6G. Moreover, communication within the communication network may utilize any proper wireless communication technology, comprising but not limited to: Code Division Multiple Access (CDMA), Frequency Division Multiple Access (FDMA), Time Division Multiple Access (TDMA), Frequency Division Duplex (FDD), Time Division Duplex (TDD), Multiple-Input Multiple-Output (MIMO), Orthogonal Frequency Division Multiple (OFDM), and/or Discrete Fourier Transform spread OFDM (DFT-s-OFDM).

As used herein, the term "network device" or "network node" refers to a node in a communication network via which user equipment may access the network and/or which is configured to control radio communication and managing radio resources within a cell. The network node or network device may be referred to as a base station (BS), an access point (AP) or an access node. The network device may be, depending on the applied technology, for example, a node B (NodeB or NB), an evolved NodeB (eNodeB or eNB), an NR NB (also referred to as a gNB), a Remote Radio Unit (RRU), a radio head (RH), a remote radio head (RRH), a relay, an Integrated Access and Backhaul (IAB) node, a low power node, a non-terrestrial network (NTN) or non-ground network device, such as a satellite network device, a low earth orbit (LEO) satellite and a geosynchronous earth orbit (GEO) satellite, or an aircraft network device.

Moreover, in connection of split radio access network (RAN), the network device may refer to a centralised unit (CU) of a base station and/or a distributed unit (DU) of a base station. An interface between CU and DU may be referred to as an F1 interface in NR. In the split RAN architecture, node operations may be carried out, at least partly, in the central/centralized unit, CU, (e.g. server, host or node) operationally coupled to the DU, (e.g. a radio head/node). One CU may control one or more DUs, acting at least as transmit/receive (Tx/Rx) nodes. In some embodiments, the DUs may comprise e.g. a radio link control (RLC), medium access control (MAC) layer and a physical (PHY) layer, whereas the CU may comprise the layers above RLC layer, such as a packet data convergence protocol (PDCP) layer, a radio resource control (RRC) and an internet protocol (IP) layers. Other functional splits are possible too. In practice, any processing task may be performed in either the CU or the DU and the boundary where the responsibility is shifted between the CU and the DU may depend on the applied implementation.

The term "terminal device" refers to any end device that may be configured to perform wireless communication. By way of example, a terminal device may be referred to as a communication device, user equipment (UE), a Subscriber Station (SS), or a Mobile Station (MS). The terminal device may include a mobile phone, a cellular phone, a smart phone, voice over IP (VoIP) phones, wireless local loop phones a tablet, a wearable terminal device, a personal digital assistant (PDA), portable computers, desktop computer, image capture terminal devices such as digital cameras, gaming terminal devices, music storage and playback appliances, vehicle-mounted wireless terminal devices, USB dongles, an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like.

A term "resource", as used herein, may refer to radio resources in time domain, in frequency domain, in space domain, and/or in code domain. Some examples of resources may include, e.g., a physical resource block (PRB), a radio frame, a subframe, a time slot, a sub-band, a frequency region, a sub-carrier, a beam, etc. The term "transmission" and/or "reception" may refer to wirelessly transmitting and/or receiving via a wireless propagation channel on radio resources.

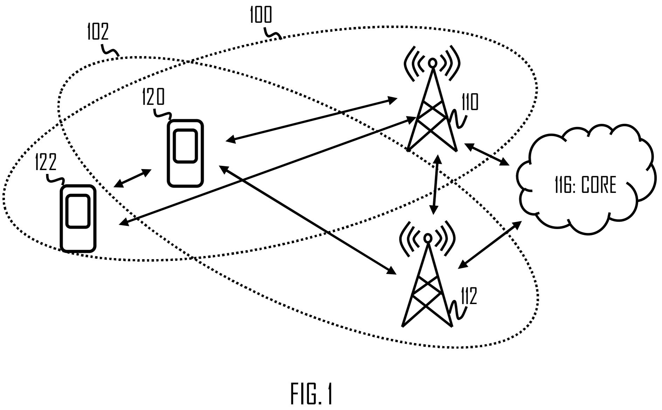

Fig. 1 illustrates an example of a communication network to which examples disclosed herein may be applied. The communication network or a cellular communication network may comprise a network node 110 configured to provide one or more cells, such as cell 100, and a network node 112 configured to provide one or more other cells, such as cell 102. Each cell may, for example, be a macro cell, a micro cell, femto, or a pico cell. The cell may define a coverage area or a service area of the corresponding access node.

The network node (110, 112) may be configured to provide a user equipment (UE) 120 (one or more UEs) with wireless access to the communication network. The wireless access may comprise downlink (DL) communication from the network node (110, 112) to the UE 120 and uplink (UL) communication from the UE 120 to the network node (110, 112). Examples of uplink channels may comprise physical uplink control channel (PUCCH) for transmitting control information and physical uplink shared channel (PUSCH) for transmitting data towards the network. Examples of downlink channels may comprise physical downlink control channel (PDCCH) for transmitting control information and physical downlink shared channel (PDSCH) for transmitting data towards the user equipment.

There may be a plurality of UEs (120, 122) in the system. Each of the plurality of UEs may be served by the same or by different network nodes (110, 112). UE may be configured with dual connectivity (DC), wherein the UE, for example UE 120, may be connected to multiple network nodes (110, 112). The UEs (120, 122) may communicate with each other, in case device-to-device (D2D) communication interface is established between them via a so-called sidelink (SL). Such D2D communications may be referred to as machine-to-machine, peer-to-peer (P2P) communications, or vehicle-to-vehicle (V2V), for example.

In the case of multiple network nodes in the communication network, the network nodes may be connected to each other via an interface. LTE specifications, for example, refer to such an interface as an X2 interface. An interface between an LTE node and a 5G node, or between two 5G nodes may be called an Xn interface.

The network nodes 110 and 112 may be further connected via another interface to a core network 116 of the communication network. The LTE specifications specify the core network as an evolved packet core (EPC), and the core network may comprise a plurality of entities (e.g. a mobility management entity (MME) and a gateway node). The MME may handle mobility of terminal devices in a tracking area encompassing a plurality of cells and handle signalling connections between the terminal devices and the core network. The gateway node may handle data routing in the core network and to/from the terminal devices. The 5G specifications specify the core network as a 5G core (5GC). The 5GC may, for example, comprise an access and mobility management function (AMF) and a user plane function/gateway (UPF) and other functions. The AMF may handle termination of non-access stratum (NAS) signalling, NAS ciphering & integrity protection, registration management, connection management, mobility management, access authentication and authorization, security context management. The UPF node may, for example, support packet routing and forwarding, packet inspection and quality of service (QoS) handling.

The following relates to fragmented carriers. Fragmented carriers are carriers of a given bandwidth of a spectrum which are separated by a frequency gap, i.e., the carriers are non-contiguous. Non-contiguous intra-band carrier aggregation is an example implementation using fragmented carriers. The fragmented carriers are within the same band.

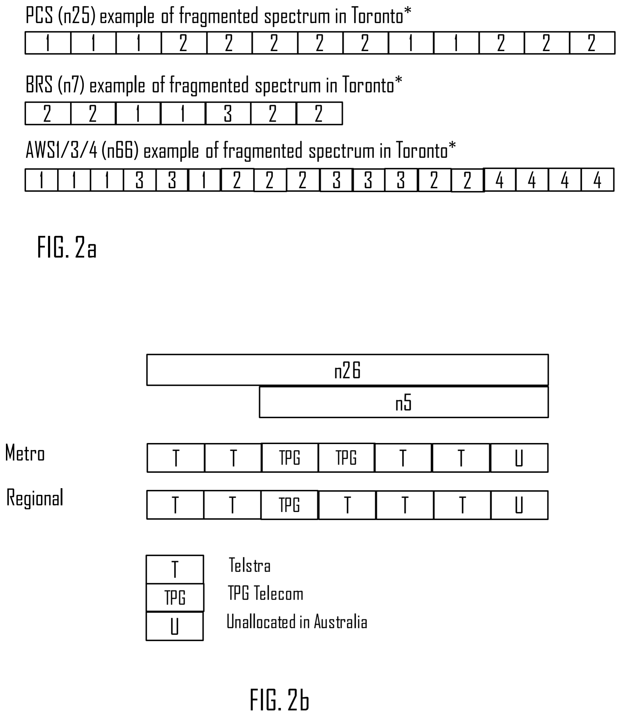

Fig. 2a shows an example of fragmented carriers in an operator's spectrum. Fig. 2a shows n25 (which is close to the same spectrum as n2, 5MHz less), n7 and n66 in Canada. The different numbering indicates different operator spectrum ownership.

Fig. 2b shows n26/n5 in Australia. The spectrum shown in Fig. 2b is allocated according to the key. As can be seen in Figs. 2a and 2b, the carrier bandwidth is separated by a frequency gap, which may include another carrier bandwidth allocated to a different operator.

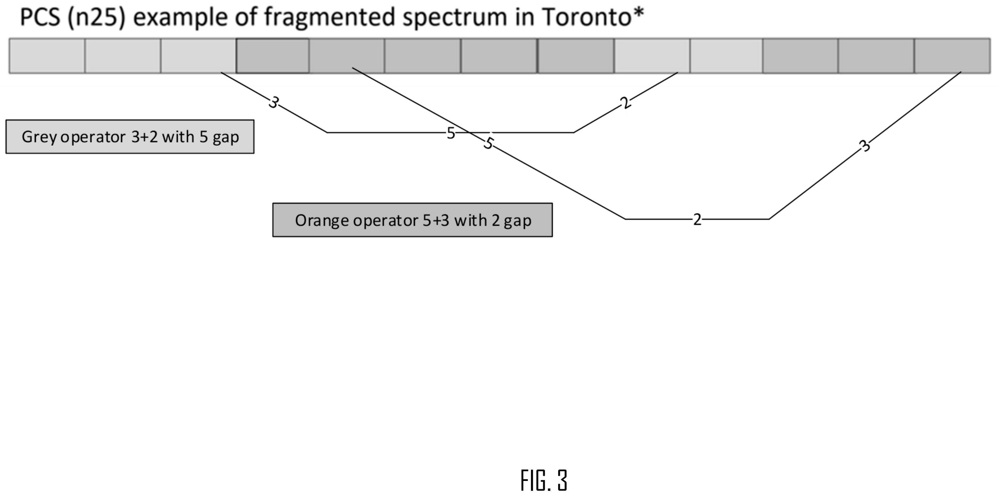

Not all fragmented bands are balanced between the carriers on the same band. Band n7 is balanced, i.e. the two carriers are of the same BW, but both band n25 and n66 are not. As can be seen in the n25 example of fragmented spectrum in Toronto as shown in Fig. 3, the fragmented spectrum may be of different distribution of available "blocks" of an operator, and the gap between the blocks may be of different size than either of the spectrum blocks available to an operator. In this example embodiment, the first operator has licensed 3 consecutive 5MHz blocks and 2 consecutive 5MHz blocks with a 5 consecutive MHz block gap located between them. The second operator has licensed 5 consecutive 5MHz blocks between those of the first operator and 2 consecutive 5MHz blocks with the consecutive 5MHz blocks of the first operator located between them.

The presence of a signal in the frequency gap between fragmented carriers may cause interference on the fragmented carriers. The signal may be referred to as an in-gap interferer.

In a direct conversion quadrature receiver, the process of demodulating signals at complex baseband involves converting the received RF signal directly to baseband using in-phase (I) and quadrature (Q) components. This process is sensitive to IQ-imbalance, which directly affects the receivers image rejection ratio (IRR) and may affect the performance. Similarly, the impact of non-linearities in the receiver chain affects the performance but has no direct impact on IRR. In-phase/quadrature imbalance is in-phase and quadrature or IQ imbalance.

IQ-imbalance refers to the mismatches between the I and Q paths in terms of amplitude and phase. Ideally, the I and Q components should have equal amplitude and a 90-degree phase difference.

Any deviation from this ideal condition results in IQ-imbalance, which causes an unwanted image signal (a mirrored version of the desired signal, also referred to as an image or demodulation image) to appear in the baseband. This is because the imbalance distorts the orthogonality of the I and Q components, leading to incomplete cancellation of the image frequency.

The IQ-Imbalance between the in-phase and quadrature components of signal output from RF receivers may be cost-effectively compensated rather than improving the analog front-end RF hardware. Direct conversion receivers, for example, introduce IQ-imbalance, which may be measured and compensated for at different carrier frequencies by means of production-time calibration. This IQ-imbalance calibration/compensation may be sufficient for meeting 3GPP receiver requirements for contiguous and non-contiguous carrier aggregation.

The IRR quantifies the receiver's ability to suppress the image signal. IQ-imbalance directly affects the IRR, as it determines how well the image signal is rejected. Poor IQ-imbalance results in a lower IRR, meaning more image signal leakage into the baseband.

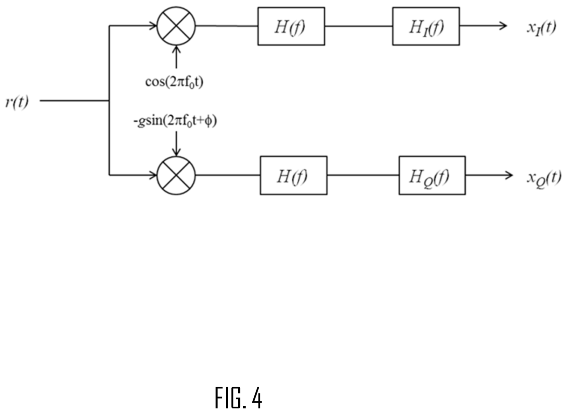

A generalized IQ-imbalance model is shown in Fig.4, where $g$ is the amplitude imbalance and $\phi$ is the phase imbalance. For no impairments, $g = 1$ and $\phi = 0$. In Fig. 4, $H(f)$ is the nominal frequency response of the branches due to, for example, low-pass filters.

$H_I(f)$ and $H_Q(f)$ represent the portions of the in-phase and quadrature amplitude and phase responses that differ from the nominal response. With perfect matching, $H_I(f) = H_Q(f) = 1$.

We define the imbalance coefficients K1 and K2 as:

$$K_1 = [1 + g \cdot e^{-j\phi}]/2$$

$$K_2 = [1 - g \cdot e^{j\phi}]/2$$

The Image Rejection Ratio (IRR) can then be expressed as

$$IRR = \frac{|K_1|^2}{|K_2|^2} = \frac{g^2 + 2g \cdot cos(\phi) + 1}{g^2 - 2g \cdot cos(\phi) + 1}$$

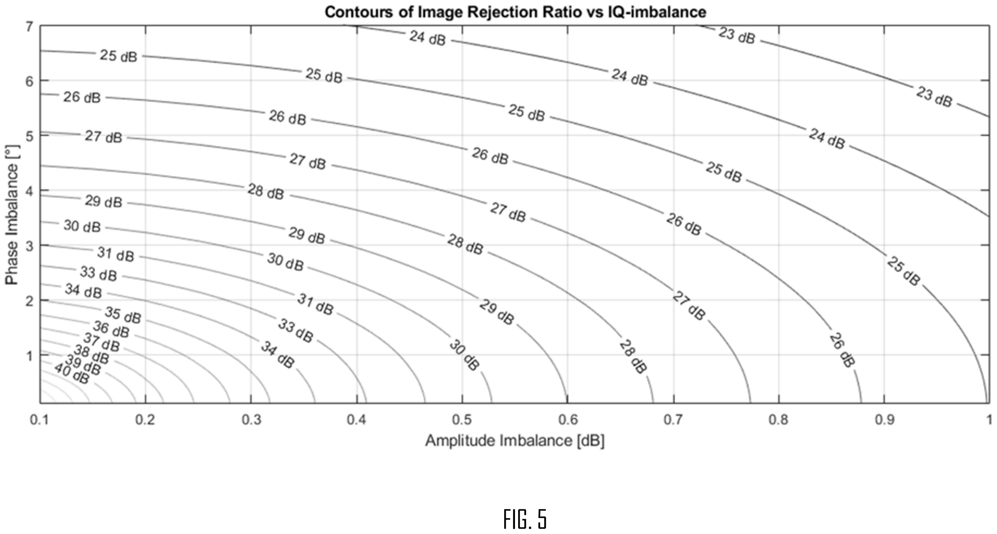

Fig. 5 shows the contours of IRR in dB vs the IQ-imbalance given as Amplitude Imbalance and Phase Imbalance.

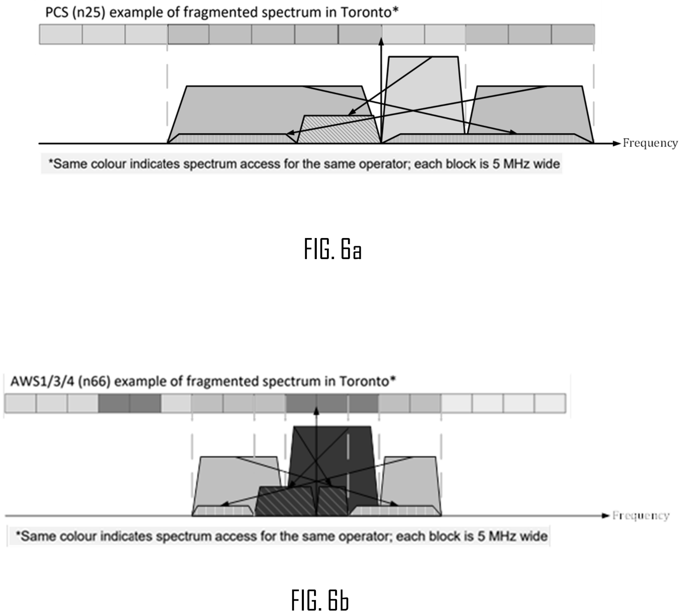

Figs. 6a and 6b illustrate how the presence of in-gap interference may cause additional degradation of the wanted component carriers due to imaging effects caused by residual IQ-imbalance after traditional calibration/compensation.

Figs. 6a and 6b shows an example of the impact of IQ-imbalance in a downlink receiver. The image of the carriers is the conjugate signal caused by the IQ-imbalance and is shown by the dashed shading. The conjugate signal results in the IQ mixing interference.

In the examples shown in Figs. 6a and 6b, IQ-imbalance causes an image of the in-gap interferer to impact the lower component carrier. The demodulation frequency is chosen traditionally, i.e. in the middle of the received band as indicated for the arrow at the center of the bandwidth confined by the dashed lines and so the in-gap interferer image affects the lower component carrier.

For a device with calibrated IQ-imbalance compensation, an IRR of 25 dB is typically sufficient to suppress IQ images from similar level component carriers, CC1 and CC2 to meet, e.g., 3GPP receiver requirements. However, as the Power Spectral Density (PSD) of the in-gap interferer becomes higher than the component carriers as depicted in Figs. 6a and 6b, the IRR is not sufficient to suppress the image from the in-gap interferer and the image will result in degradation of the affected subcarriers.

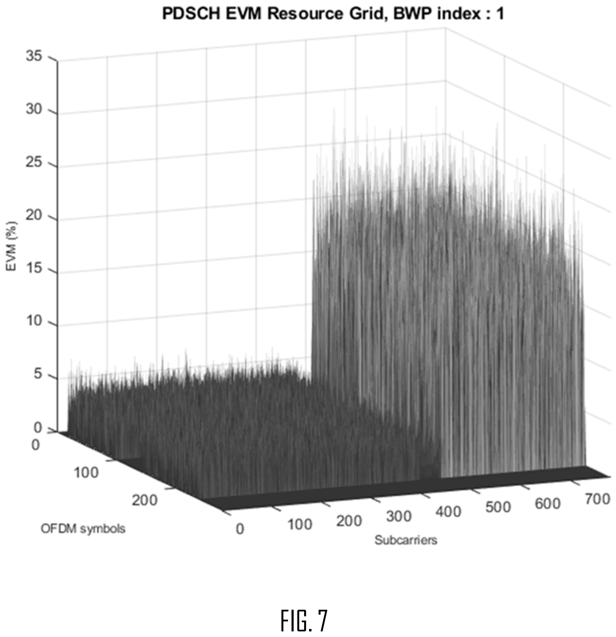

Fig. 7 shows a simulation of error vector magnitude (EVM) in the frequency domain. The subcarriers where the image from the in-gap interferer is present are significantly distorted (the EVM is significantly higher than that of the other subcarriers in the BWP).

The method described in the following passages aims to minimize the impacts of images caused by in-gap interferers when demodulating fragmented carrier pairs of unequal bandwidths.

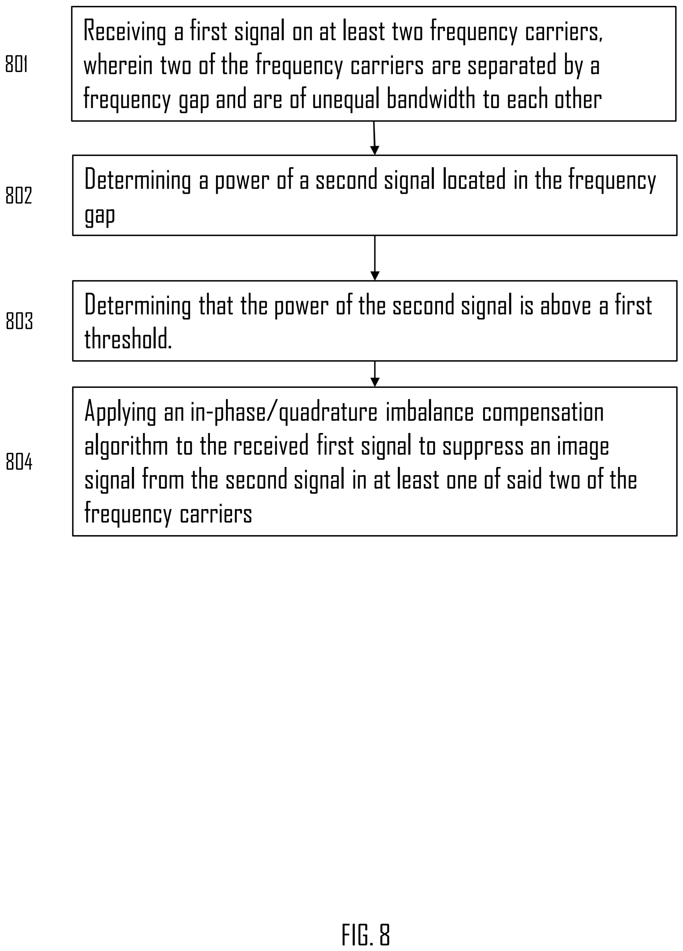

Fig. 8 is a flowchart of a method according to an example embodiment. The method may be performed at an apparatus. The apparatus may be, may comprise or may be comprised in a user equipment.

At 801, the method comprises receiving a first signal on at least two frequency carriers, wherein two of the frequency carriers are separated by a frequency gap and are of unequal bandwidth to each other.

At 802, the method comprises determining a power of a second signal located in the frequency gap.

At 803, the method comprises determining that the power of the second signal is above a first threshold.

At 804, the method comprises applying an in-phase quadrature (IQ) imbalance compensation algorithm to the received first signal to suppress an image signal from the second signal in at least one of said two of the frequency carriers.

A method as described with reference to Fig. 8 may minimize the impacts of demodulation images (caused by IQ-imbalance) when demodulating fragmented carrier pairs of unequal bandwidth. The two of the frequency carriers are within the same band.

In an example embodiment, when the scenario of fragmented unequal bandwidth carriers is detected at the UE (e.g., a first signal is received on at least two frequency carriers, wherein two of the frequency carriers are separated by a frequency gap and are of unequal bandwidth to each other) and the in-gap interferer (e.g., a second signal located in a frequency gap) is larger than a given threshold (e.g., the power of the second signal is above a first threshold), the UE enables additional adaptive IQ- imbalance compensation. Enabling additional adaptive IQ-imbalance compensation may comprise applying an IQ-imbalance compensation algorithm to the received first signal. Applying the IQ-imbalance compensation algorithm to then received first signal may suppress an image signal from the second signal in at least one of said two of the frequency carriers. The reception of the in-gap interferer between wanted spectrum allocations that causes interference as image interference to the wanted signal due to the placement of the down-conversion frequency may thus be minimized through image cancellation.

The first threshold may be referred to as a threshold $P_{th}$ for enabling of adaptive IQ-imbalance compensation, which results in suppression of the unwanted image from the in-gap interferer. The first threshold may be determined based on the capabilities of the receiver (e.g., the IRR of the receiver or the SNR of the receiver). The threshold may be an absolute value or it may be relative to the received power of the first signal.

This method may be applicable to any radio receiver that deals with reception of unequal spectrum fragments with interference present between the wanted spectrum. Applying this method, a UE may become more resilient to the image presence, which improves the UEs receiver sensitivity in the unequal carrier bandwidth reception cases, with an in-gap interference presence.

In an example, when the UE is requested to receive the type of fragmented unequal bandwidth carriers, the UE will apply the method as described with reference to Fig. 8. The method may comprise receiving a network radio channel configuration at the apparatus and determining that the two of the frequency carriers are separated by the frequency gap and are of unequal bandwidth to each other based on the received network radio channel configuration.

For example, in relation to 5G/6G operation of fragmented carriers, the UE may use the network radio channel configuration as a trigger to engage with the method described herein. More generally, the UE may determine the fragmented signal allocation through other means and apply a method as described with reference to Fig. 8. For example, the method may comprise determining that the two of the frequency carriers are separated by the frequency gap and are of unequal bandwidth to each other based on at least one of the BWP size, resource block allocation, frequency location, control resource set (CORESET) or the center frequency of the two of the frequency carriers.

In an example embodiment, to overcome the problem of insufficient Image Rejection in the presence of large in-gap interference signals, time and/or frequency domain IQ-imbalance compensation can be implemented at the digital baseband, when the scenario of fragmented unequal bandwidth carriers is detected at the UE.

Bandwidth Part (BWP) is a contiguous set of resource blocks (RB) on a given carrier. When gNB configures a BWP, the gNB includes parameters like BWP bandwidth size, Frequency location (NR-ARFCN), CORESET (Control Resource Set) for each CC.

The IQ-imbalance compensation algorithm may be applied in the time domain and/or a frequency domain. The IQ-imbalance compensation algorithm may be adaptive. Both time domain and time and frequency domain IQ-Imbalance (or Mismatch) Compensation algorithms are well described in the literature. A time domain adaptive algorithm is described in the following example, but the IQ-imbalance compensation algorithm may be any suitable algorithm in the time and/or frequency domain. Applying the compensation algorithm may be referred to as enabling image suppression.

In an example embodiment, a blind compensation algorithm is used as the basis for adaptive IQ-imbalance compensation as follows:

Let $z(t)$ be the ideal baseband equivalent signal of the received signal, $r(t)$, where its Fourier transform is denoted as $Z(f)$. Given the generalized IQ-imbalance model, the Fourier transform of the imbalanced signal, $x(t) = x_I(t) + x_Q(t)$, is

$$X(f) = G_1(f)Z(f) + G_2(f)Z^*(-f)$$

where $G_1(f)$ and $G_2(f)$ are the direct and conjugate components of the IQ-imbalance. These components are defined as

$$G_1(f) = \left[H_I(f) + H_Q(f) \cdot g \cdot exp(-j\phi)\right]/2$$

$$G_2(f) = \left[H_I(f) - H_Q(f) \cdot g \cdot exp(j\phi)\right]/2$$

Applying the inverse Fourier transform to $X(f)$, the signal model becomes

$$x(t) = g_1(t) \times z(t) + g_2(t) \times z^*(t)$$

The compensated signal is then expressed as $y(n) = x(n) + w \otimes x^*(n)$., where $\otimes$ denotes convolution. After enabling of the adaptive algorithm the filter weights, w will update and converge to an equilibrium state, where $-w \otimes x^*(n)$ is a complex time domain approximation of the image caused by IQ-imbalance, hence the compensated signal $y(n) = x(n) + w \otimes x^*(n)$ now has a significant suppression of the image of the in-band interferer.

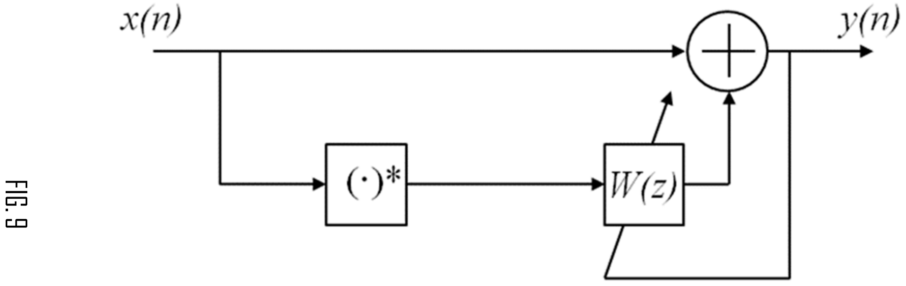

An example compensator structure is shown in Fig. 9 in which discrete time notation expresses the variables.

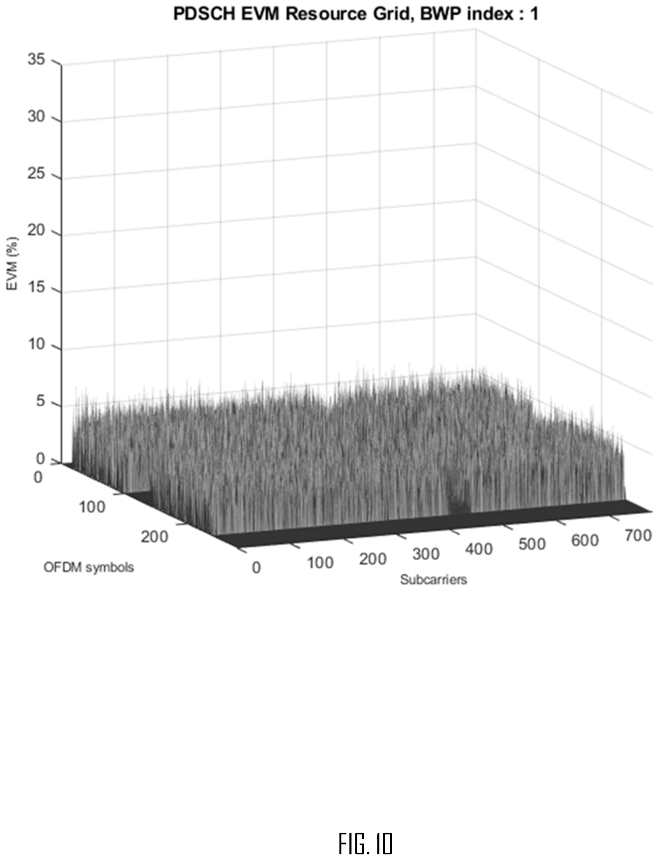

Fig. 10 shows the EVM of the compensated signal $y(n)$ in the frequency domain. As can be seen from Fig. 10, the residual image distortion after adaptive IQ-imbalance compensation for the subcarriers corresponding to the image from the in-gap interferer is now at the same level as the unaffected subcarriers.

A method as described with reference to Fig. 8 may comprise determining that the power of the second signal is below a second threshold, wherein the second threshold is equal to or lower than the first threshold and determining to stop applying the in-phase quadrature imbalance compensation algorithm to the received first signal.

The second threshold may be determined based on the capabilities of the receiver (e.g., the IRR of the receiver or the SNR of the receiver). The threshold may be an absolute value or it may be relative to the received power of the first signal.

An example flowchart is shown in Fig .11 in which:

At step 1 the scenario of fragmented unequal bandwidth carriers is identified. This step may take place at call set up time. This is an example of determining that two of the frequency carriers (on which a first signal is received) are separated by the frequency gap and are of unequal bandwidth to each other

At step 2, the Power Spectral Density (PSD) of the in-gap interferer, $P_{int}$, is measured. This is an example of determining a power of a second signal located in the frequency gap.

At step 5, it is determined if image suppression is enabled. If no, at step 6, it is determined if $P_{int} > P_{th}$. If so then an adaptive IQ-imbalance compensation algorithm in the frequency domain and/or time domain is enabled at step 7 and as described above.

This is an example of determining that the power of the second signal is above a first threshold and applying an in-phase quadrature imbalance compensation algorithm to the received first signal to suppress an image signal from the second signal in at least one of said two of the at least frequency carriers

If yes, at step 9 it is determined if $P_{int} \leq P_{th}$. If so, adaptive image suppression is disabled. This is an example of determining that the power of the second signal is below a second threshold, wherein the second threshold is equal to or lower than the first threshold and determining to stop applying the in-phase quadrature imbalance compensation algorithm to the received first signal.

Using methods as described may mean that images due to IQ-imbalance are adaptively suppressed vs mitigated with other means, meaning the boundary for when the device needs to mitigate the effects of IQ-imbalance images is extended.

The method will give a clear metric on when IQ-imbalance images can no longer be suppressed sufficiently and requires mitigation.

An apparatus may maintain the 3GPP required IRR performance even if the in-gap interferer grows above the wanted signal in power, meaning better handling of the near/far problem if the in-gap interferer operator and the fragmented carrier operator are not co-located.

A receiver implementing this method may be superior in performance to a receiver that relies on potential reference sensitivity relaxation in un-equal carrier bandwidth configurations for fragmented CA.

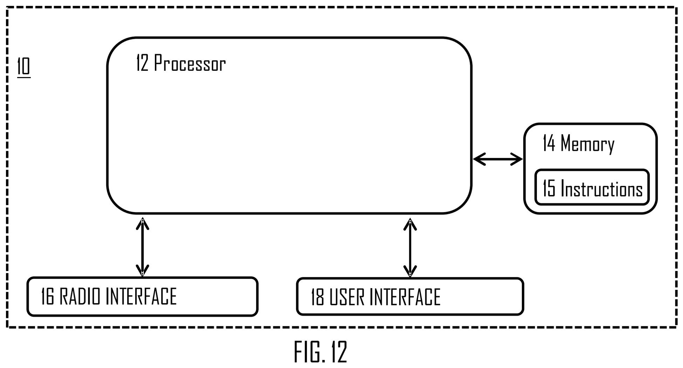

Fig. 12 shows, by way of example, a block diagram of an apparatus 10. The apparatus 10 comprises, for example, at least one processor 12 and at least one memory 14 storing instructions 15 that, when executed by the at least one processor, cause the apparatus 10 at least to perform the method or methods (or portion(s) thereof) as disclosed herein, and any of the embodiments (or respective portion(s) thereof). In an example, the at least one memory and the instructions (e.g. a computer program code, software), are configured, with the at least one processor, to cause the apparatus 10 to perform the method or methods (or portion(s) thereof) as disclosed herein, and any of the embodiments (or respective portion(s) thereof).

A processor 12 may comprise circuitry, or be constituted as circuitry or circuitries, the circuitry or circuitries being configured to perform phases of methods in accordance with embodiments described herein.

As used herein, the term "circuitry" may refer to one or more or all of the following: (a) hardware-only circuit implementations, such as implementations in only analog and/or digital circuitry, and (b) combinations of hardware circuits and software, such as, as applicable: (i) a combination of analog and/or digital hardware circuit(s) with software/firmware and (ii) any portions of hardware processor(s) with software (including digital signal processor(s)), software, and memory(ies) that work together to cause an apparatus, such as a user equipment, to perform various functions) and (c) hardware circuit(s) and or processor(s), such as a microprocessor(s) or a portion of a microprocessor(s), that requires software (e.g., firmware) for operation, but the software may not be present when it is not needed for operation. This definition of circuitry applies to all uses of this term herein, including in any claims. As a further example, as used herein, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

The memory 14 may be implemented using any suitable data storage technology. The memory may comprise a database for storing data. The memory 14 may, for example, be at least in part external to apparatus 10 but accessible to apparatus 10.

The instructions 15 may be comprised in a computer readable medium or a non-transitory computer readable medium. A term non-transitory, as used herein, is a limitation of the medium itself (i.e. tangible, not a signal) as opposed to a limitation on data storage persistency (e.g. random access memory, RAM, vs. read only memory, ROM).

For example, the apparatus 10 may be a terminal device, such as a UE. As another example, the apparatus is comprised in such a terminal device, e.g. as a chipset configured to control the terminal device. The apparatus 10 may be caused or configured or comprise means to perform at least the method of Fig. 8 and/or any one or more of the embodiments described herein.

The apparatus 10 comprises a radio interface 16. The radio interface 16 may provide the apparatus 10 with communication capabilities. The radio interface 16 may comprise a receiver configured to receive information in accordance with at least one cellular or non-cellular standard. The radio interface 16 may comprise a transmitter configured to transmit information in accordance with at least one cellular or non-cellular standard. The receiver may comprise more than one receiver. The transmitter may comprise more than one transmitter. The radio interface 16 may comprise a transceiver configured to receive and transmit information in accordance with at least one cellular or non-cellular standard. The transceiver may comprise more than one transceiver.

The apparatus 10 may comprise a user interface 18 comprising, for example, at least one of a keypad, a microphone, a touch display, a display, a speaker, etc. The user interface 18 may be used to control the apparatus by the user. The user interface 18 may be external to the apparatus 10. For example, the apparatus 10 may be connected to another device, such as a computer, either via wireless or wired connection, and the apparatus 10 is controlled by the user via the computer.

In an embodiment, at least some of the processes described herein may be carried out by an apparatus comprising means for carrying out at least some of the described processes. Means for performing method steps as disclosed herein may include software and/or hardware components of the apparatus 10. For example, the at least one processor 12, the memory 14, and the computer program code form means for carrying out the method or methods (or portion(s) thereof) as disclosed herein, and any of the embodiments (or respective portion(s) thereof). As used herein the term "means" is to be construed in singular form, i.e. referring to a single element, or in plural form, i.e. referring to a combination of single elements. Therefore, terminology "means for [performing A, B, C]", is to be interpreted to cover an apparatus in which there is only one means for performing A, B and C, or where there are separate means for performing A, B and C, or partially or fully overlapping means for performing A, B, C. Further, terminology "means for performing A, means for performing B, means for performing C" is to be interpreted to cover an apparatus in which there is only one means for performing A, B and C, or where there are separate means for performing A, B and C, or partially or fully overlapping means for performing A, B, C.

Even though this disclosure has been described above with reference to non-limiting and illustrative examples according to the accompanying figures, it is clear that the scope of this disclosure is not restricted thereto - but can be modified in many different ways. As technology advances, it will become apparent to a person skilled in art as to how the disclosure can be further implemented and/or modified in various ways. Further, it is clear to a person skilled in the art that the embodiments described herein may, but are not required to, be combined in various ways with other embodiments described herein.

**Claims**

1. An apparatus comprising:

   means for receiving a first signal on at least two frequency carriers, wherein two of the frequency carriers are separated by a frequency gap and are of unequal bandwidth to each other;
   means for determining a power of a second signal located in the frequency gap;
   means for determining that the power of the second signal is above a first threshold; and
   means for applying an in-phase/quadrature imbalance compensation algorithm to the received first signal to suppress an image signal from the second signal in at least one of said two of the frequency carriers.

2. The apparatus according to claim 1, wherein the means for applying the in-phase/quadrature compensation algorithm is configured to apply the in-phase/quadrature compensation algorithm in a time domain and/or a frequency domain.

3. The apparatus according to claim 1 or claim 2, comprising:

   means for receiving a network radio channel configuration at the apparatus; and
   means for determining that the two of the frequency carriers are separated by the frequency gap and are of unequal bandwidth to each other based on the received network radio channel configuration.

4. The apparatus according to claim 1 or claim 2, comprising:
   means for determining, for the two of the frequency carriers, at least one of a bandwidth part size, a resource block allocation, a frequency location, a control resource set or a center frequency; and
   means for determining that the two of the frequency carriers are separated by the frequency gap and are of unequal bandwidth to each other based on the determined at least one of the bandwidth part size, the resource block allocation, the frequency location, the control resource set or the center frequency of the two of the frequency carriers.

5. The apparatus according to any of claims 1 to 4, wherein the in-phase/quadrature imbalance compensation algorithm is adaptive.

6. The apparatus according to any of claims 1 to 5, comprising:

   means for determining that the power of the second signal is below a second threshold, wherein the second threshold is equal to or lower than the first threshold; and
   means for, based on the determining that the power of the second signal is below a second threshold, determining to stop applying the in-phase/quadrature imbalance compensation algorithm to the received first signal.

7. The apparatus according to any of claims 1 to 6, wherein the apparatus is, comprises, or is comprised in, a user equipment.

8. The apparatus according to any of claims 1 to 7, wherein the means comprise: at least one processor; and at least one memory storing instructions that, when executed by the at least one processor, cause the performance of the apparatus.

9. A method comprising:

receiving a first signal on at least two frequency carriers, wherein two of the frequency carriers are separated by a frequency gap and are of unequal bandwidth to each other;
determining a power of a second signal located in the frequency gap;
determining that the power of the second signal is above a first threshold; and
applying an in-phase/quadrature imbalance compensation algorithm to the received first signal to suppress an image signal from the second signal in at least one of said two of the frequency carriers.

10. A computer readable medium, comprising instructions wherein the instructions, when executed by at least one processor of an apparatus cause the apparatus to perform:

receiving a first signal on at least two frequency carriers, wherein two of the frequency carriers are separated by a frequency gap and are of unequal bandwidth to each other;
determining a power of a second signal located in the frequency gap;
determining that the power of the second signal is above a first threshold; and
applying an in-phase/quadrature imbalance compensation algorithm to the received first signal to suppress an image signal from the second signal in at least one of said two of the frequency carriers.

FIG.1

PCS (n25) example of fragmented spectrum in Toronto*

| 1 | 1 | 1 | 2 | 2 | 2 | 2 | 2 | 1 | 1 | 2 | 2 | 2 |
|---|---|---|---|---|---|---|---|---|---|---|---|---|

BRS (n7) example of fragmented spectrum in Toronto*

| 2 | 2 | 1 | 1 | 3 | 2 | 2 |
|---|---|---|---|---|---|---|

AWS1/3/4 (n66) example of fragmented spectrum in Toronto*

| 1 | 1 | 1 | 3 | 3 | 1 | 2 | 2 | 2 | 3 | 3 | 3 | 2 | 2 | 4 | 4 | 4 | 4 |
|---|---|---|---|---|---|---|---|---|---|---|---|---|---|---|---|---|---|

## FIG. 2a

| n26 |
|---|

| | n5 |
|---|---|

Metro

| T | T | TPG | TPG | T | T | U |
|---|---|-----|-----|---|---|---|

Regional

| T | T | TPG | T | T | T | U |
|---|---|-----|---|---|---|---|

| T | Telstra |
|---|---|
| TPG | TPG Telecom |
| U | Unallocated in Australia |

## FIG. 2b

PCS (n25) example of fragmented spectrum in Toronto*

Grey operator 3+2 with 5 gap

Orange operator 5+3 with 2 gap

FIG. 3

EP 4 723 489 A1

FIG. 4

**Contours of Image Rejection Ratio vs IQ-imbalance**

FIG. 5

EP 4 723 489 A1

PCS (n25) example of fragmented spectrum in Toronto*

*Same colour indicates spectrum access for the same operator; each block is 5 MHz wide

FIG. 6a

AWS1/3/4 (n66) example of fragmented spectrum in Toronto*

*Same colour indicates spectrum access for the same operator; each block is 5 MHz wide

FIG. 6b

FIG. 7

801 | Receiving a first signal on at least two frequency carriers, wherein two of the frequency carriers are separated by a frequency gap and are of unequal bandwidth to each other

802 | Determining a power of a second signal located in the frequency gap

803 | Determining that the power of the second signal is above a first threshold.

804 | Applying an in-phase/quadrature imbalance compensation algorithm to the received first signal to suppress an image signal from the second signal in at least one of said two of the frequency carriers

FIG. 8

FIG. 9

FIG. 10

FIG. 11

10

12 Processor

14 Memory

15 Instructions

16 RADIO INTERFACE

18 USER INTERFACE

FIG. 12

Europäisches
Patentamt

European
Patent Office

Office européen
des brevets

# EUROPEAN SEARCH REPORT

**Application Number**

EP 25 20 6667

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/268232 A1 (PARK CHESTER [US] ET AL) 3 November 2011 (2011-11-03) | 1-4,6-10 | INV.<br>H04B1/10<br>H04B1/30<br>H04B1/12 |
| Y | * paragraphs [0003], [0012], [0052], [0060] *<br>* paragraphs [0026], [0041] - paragraph [0046] *<br>* figure 9 * | 5 | |
| X | US 2015/171906 A1 (WONG YEW LEONG [MY] ET AL) 18 June 2015 (2015-06-18) | 1,9,10 | |
| Y | * paragraph [0040] *<br>* figure 3 * | 5 | |
| A | US 2012/177147 A1 (PARK CHESTER [US] ET AL) 12 July 2012 (2012-07-12)<br>* paragraphs [0084], [0088], [0089] *<br>* paragraphs [0004], [0006] *<br>* figure 4 * | 1-10 | |

-----

-----

-----

**TECHNICAL FIELDS SEARCHED (IPC)**

H04B

The present search report has been drawn up for all claims

| Place of search | Date of completion of the search | Examiner |
|---|---|---|
| Munich | 2 February 2026 | Avilés Martínez, L |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

..........................................................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 20 6667

This annex lists the patent family members relating to the patent documents cited in the above-mentioned European search report.
The members are as contained in the European Patent Office EDP file on
The European Patent Office is in no way liable for these particulars which are merely given for the purpose of information.

02-02-2026

| Patent document cited in search report | Publication date | Patent family member(s) | | Publication date |
|---|---|---|---|---|
| US 2011268232 A1 | 03-11-2011 | CN | 102859959 A | 02-01-2013 |
| | | CN | 102870389 A | 09-01-2013 |
| | | DK | 2567522 T3 | 20-07-2015 |
| | | EP | 2567522 A1 | 13-03-2013 |
| | | EP | 2567523 A1 | 13-03-2013 |
| | | JP | 5777704 B2 | 09-09-2015 |
| | | JP | 2013534738 A | 05-09-2013 |
| | | KR | 20130079417 A | 10-07-2013 |
| | | RU | 2515282 C1 | 10-05-2014 |
| | | US | 2011268232 A1 | 03-11-2011 |
| | | US | 2012230372 A1 | 13-09-2012 |
| | | WO | 2011138697 A1 | 10-11-2011 |
| | | WO | 2011140046 A1 | 10-11-2011 |
| US 2015171906 A1 | 18-06-2015 | NONE | | |
| US 2012177147 A1 | 12-07-2012 | CN | 103430239 A | 04-12-2013 |
| | | EP | 2663982 A1 | 20-11-2013 |
| | | US | 2012177147 A1 | 12-07-2012 |
| | | WO | 2012095770 A1 | 19-07-2012 |

EPO FORM P0459